Europäisches Patentamt

European Patent Office

Office européen des brevets

(19)

(11) **EP 0 840 685 B1**

(12) **EUROPÄISCHE PATENTSCHRIFT**

(45) Veröffentlichungstag und Bekanntmachung des Hinweises auf die Patenterteilung:
**03.11.1999 Patentblatt 1999/44**

(21) Anmeldenummer: 96927003.2

(22) Anmeldetag: **15.07.1996**

(51) Int. Cl.$^6$: **B60T 13/72**, G05D 3/12

(86) Internationale Anmeldenummer:
**PCT/EP96/03095**

(87) Internationale Veröffentlichungsnummer:
**WO 97/05000 (13.02.1997 Gazette 1997/08)**

(54) **ELEKTROMAGNETISCHE BETÄTIGUNGSEINRICHTUNG**

ELECTROMAGNETIC ACTUATING DEVICE

DISPOSITIF D'ACTIONNEMENT ELECTROMAGNETIQUE

(84) Benannte Vertragsstaaten:
**DE ES FR GB IT**

(30) Priorität: **27.07.1995 DE 19527493**

(43) Veröffentlichungstag der Anmeldung:
**13.05.1998 Patentblatt 1998/20**

(73) Patentinhaber:
**LUCAS INDUSTRIES public limited company Solihull, West Midlands B90 4LA (GB)**

(72) Erfinder:
• **LINDEN, Christoph**
**D-56566 Neuwied (DE)**
• **HELBING, Stefan**
**D-56642 Kruft (DE)**

(74) Vertreter:
**Schmidt, Steffen J., Dipl.-Ing.**
**Wuesthoff & Wuesthoff,**
**Patent- und Rechtsanwälte,**
**Schweigerstrasse 2**
**81541 München (DE)**

(56) Entgegenhaltungen:
**US-A- 5 067 524          US-A- 5 179 330**

## Beschreibung

Die Erfindung betrifft eine elektromagnetische Betätigungseinrichtung, die eine mit einem Steuerstrom beaufschlagbare Magnetspule und einen der Magnetspule zugeordneten Anker aufweist, der dazu eingerichtet ist, Bewegungen auszuführen, die von einem durch die Magnetspule fließenden Steuerstrom und einer den Anker in entgegengesetzte Richtungen vorspannende Federanordnung abhängig sind, wobei eine Haltestellung definiert ist, die der Anker bei einem Haltestrom durch die Magnetspule einnimmt.

Derartige elektromagnetische Betätigungseinrichtungen werden z.B. für Ventile oder dergl. eingesetzt, siehe z.B. US-A-5 179 330.

Ein Problem ist dabei, daß insbesondere beim schnellen Schalten des Ventils aus einer Stellung in eine andere Stellung durch auf Teile des Ventils wirkende Störungseinflüsse (externe Kräfte, Reibung, Verschleiß, Herstellungstoleranzen, Veränderung des Langzeitverhaltens etc.) ein Überschwingen des Ankers auftreten kann, so daß der Anker nicht in die gewünschte, sondern in eine weitere Stellung gelangt. Dies kann insbesondere bei sicherheitskritischen Anwendungen zu erheblichen Problemen führen. Dies gilt umsomehr, als es auch Anwendungen gibt, bei denen das Verlassen der einen Stellung, um in die andere Stellung zu gelangen, unmittelbar Störungseinflüsse hervorruft, so daß eine Verhinderung des oben geschilderten Problems besonders schwierig ist.

Zur Lösung des Problems ist bei der oben angegebenen elektromagnetische Betätigungseinrichtung der durch die Magnetspule fließende Haltestrom auf einen höheren Wert oder auf einen niedrigeren Wert veränderbar, ohne daß der Anker die Haltestellung verläßt, und der höhere sowie der niedrigere Stromwert sind so bemessbar, daß Störungseinflüsse auf die den Anker betätigenden Magnet- und Federkräfte den Anker nicht in eine von der Haltestellung unterschiedliche betätigte Stellung bringen.

Vorzugsweise ist mit der erfindungsgemäßen elektromagnetischen Betätigungseinrichtung eine Regeleinrichtung für den Steuerstrom der elektromagnetische Betätigungseinrichtung verbunden, wobei eine mit der Position des Ankers in Beziehung stehende Größe erfaßt und einer Regeleinrichtung als Regelgröße zugeführt wird, durch die Regeleinrichtung der Magnetspule als Stellgröße ein Steuerstrom zugeführt wird, und als Führungsgröße der Regeleinrichtung von außen ein Sollwert für die mit der Position des Ankers in Beziehung stehende Größe vorgegeben wird.

Die Regeleinrichtung wird vorzugsweise gemäß einem Verfahren betrieben, bei dem ein Haltestrom, ein höherer sowie ein niedrigerer Stromwert so festgelegt werden, daß Störungseinflüsse auf die den Anker betätigenden Magnet- und Federkräfte den Anker beim Wechsel aus einer zweiten betätigten Stellung in eine Haltestellung nicht in eine erste betätigte Stellung bringen.

Um die elektromagnetische Betätigungseinrichtung möglichst genau in eine (Halte-)Stellung zu bringen, die zwischen einer ersten und einer zweiten Stellung liegt, wird gemäß der Erfindung bevorzugt folgende Vorgehensweise angewendet:

a) Ausgeben eines Steuerstroms für die Haltestellung der elektromagnetischen Betätigungseinrichtung als Stellgröße, falls eine Regelabweichung zwischen einer Führungsgröße und einer Regelgröße den Betrag eines vorbestimmten Wertes nicht überschreitet;

b) Ausgeben eines Steuerstroms für eine erste Betätigungsstellung der elektromagnetischen Betätigungseinrichtung als Stellgröße, falls die Regelabweichung zwischen der Führungsgröße und der Regelgröße den vorbestimmten Wert unterschreitet; und

c) Ausgeben eines Steuerstroms für eine zweite Betätigungsstellung der elektromagnetischen Betätigungseinrichtung als Stellgröße, falls die Regelabweichung zwischen der Führungsgröße und der Regelgröße den vorbestimmten Wert überschreitet.

Unter dem "Betrag eines vorbestimmten Wertes" ist der Bereich zu verstehen, der sich zwischen dem negativen Wert des vorbestimmten Wertes und dem positiven Wert des vorbestimmten Wertes erstreckt. Damit soll sichergestellt werden, daß eine dauernde Regelabweichung nicht zu einem Ansprechend der Regelung führt, sondern Toleranzen innerhalb des Bereichs möglich sind. Die Toleranzbreite kann durch die Veränderung der vorbestimmten Wertes geändert werden und kann auch auf Null gesetzt sein.

Um die ausgegebenen Stromwerte zu bestimmen, wird gemäß der Erfindung (vor dem eigentlichen Betrieb der elektromagnetischen Betätigungseinrichtung) sozusagen im Lernbetrieb ein Verfahren mit den folgendes Schritten ausgeführt:

a) Festlegen eines Steuerstroms (I0) für die Haltestellung der elektromagnetischen Betätigungseinrichtung als Stellgröße;

b) Bestimmen einer mit der Position des Ankers in der Haltestellung (P0) in Beziehung stehenden Größe ;

c) Schrittweises Erhöhen des Steuerstroms um einen vorbestimmten Stromschritt und Ausgeben des Steuerstroms an die Magnetspule der elektromagnetischen Betätigungseinrichtung als Stellgröße solange, bis sich die mit der Position des Ankers in der Haltestellung in Beziehung stehende Größe um einen vorherbestimmten Wert in Richtung der zweiten betätigten Stellung ändert; und

d) Speichern des dabei ausgegebenen Steuerstroms als höherer Stromwert.

Um besonders weiche Schaltvorgänge zu erreichen, kann erfindungsgemäß bei dem vorherbeschiebenen Verfahren der beim Schritt c) ermittelte Steuerstrom vor dem Speichern in Schritt d) um einen Stromschritt verringert wird.

In analoger Weise wird erfindungsgemäß der niedrigere Stromwert wie folgt ermittelt:

e) Festlegen eines Steuerstroms (I0) für die Halte-stellung der als Stellgröße;

f) Bestimmen einer mit der Position des Ankers in der Haltestellung (P0) in Beziehung stehenden Größe;

g) Schrittweises Verringern des Steuerstroms um einen vorbestimmten Stromschritt ( In+1 :=In - dI ) und Ausgeben des Steuerstroms (In+1) an die Magnetspule der elektromagnetischen Betätigungseinrichtung als Stellgröße solange, bis sich die mit der Position des Ankers in der Haltestellung (P0) in Beziehung stehende Größe um einen vorherbestimmten Wert in Richtung der ersten betätigten Stellung (P1) ändert; und

h) Speichern des dabei ausgegebenen Steuerstroms (I) als niedrigerer Stromwert (I1).

Wobei auch hier entsprechend der beim Schritt g) ermittelte Steuerstrom vor dem Speichern in Schritt h) um einen Stromschritt (dI) erhöht werden kann.

Ein für den Betrieb der elektromagnetischen Betätigungseinrichtung besonders geeigneter Wert für den Haltestrom für kann aus dem höheren und dem niedrigeren Stromwert ermittelt werden.

Vorzugsweise wird der Haltestrom als arithmetisches Mittel des höheren und des niedrigeren Stromwertes bestimmt.

Die Erfindung und das erfindungsgemäße Verfahren zum Betreiben einer elektromagnetischen Betätigungseinrichtung wird im folgenden am Beispiel einer Ventilanordnung eines elektronisch gesteuerten Bremskraftverstärkers ausgeführt. Dazu zeigen:

Fig. 1    schematisch einen Schnitt durch eine Ventilanordnung eines elektronisch gesteuerten Bremskraftverstärkers in einem unbetätigten Zustand,

Fig. 2    schematisch einen Schnitt durch eine Ventilanordnung eines elektronisch gesteuerten Bremskraftverstärkers in einem betätigten Zustand,

Fig. 3    idealisiert ein Diagramm zur Erläuterung der Steuerkennlinie einer elektromagnetischen Betätigungseinrichtung,

Fig. 4    den Aufbau eines einfachen geschlossenen Regelkreises,

Fig. 5    ein Flußdiagramm eines Verfahrens zur Regelung einer elektromagnetischen Betätigungseinrichtung,

Fig. 6    ein Flußdiagramm eines Verfahrens zum Lernen der Eckpunkte der Steuerkennlinie einer elektromagnetischen Betätigungseinrichtung.

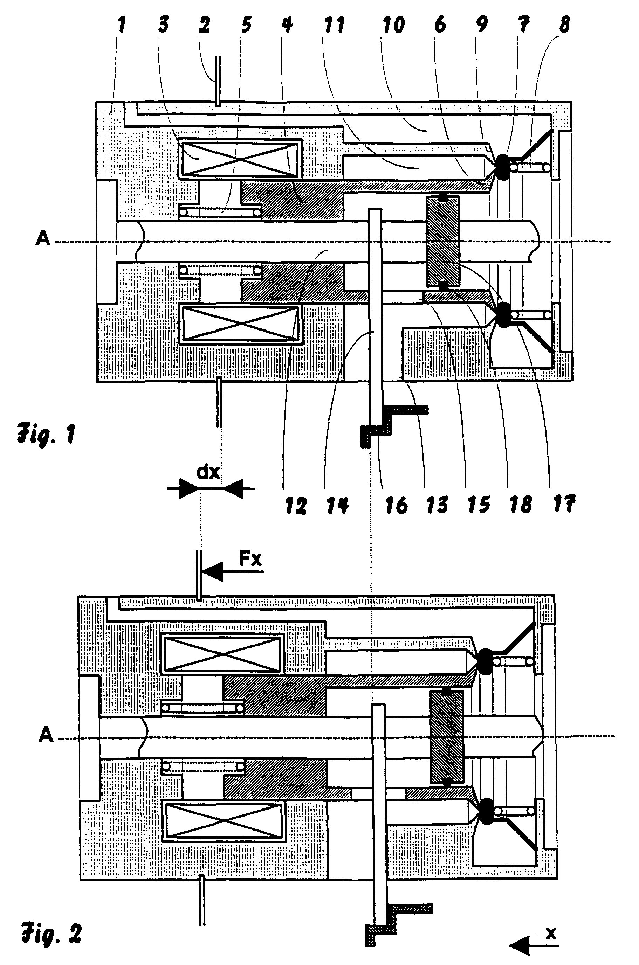

Die in Fig. 1 und 2 schematisch dargestellte Ventilanordnung eines elektronisch gesteuerten Brems-kraftverstärkers ist im wesentlichen rotationssymme-trisch in Bezug auf eine Achse A und weist ein Gehäuse 1 auf, das mit einer beweglichen Wand 2 fest verbunden ist. Die bewegliche Wand 2 unterteilt den Bremskraftverstärker (nicht gezeigt) in zwei Kammern, wobei sich auf der linken Seite der beweglichen Wand 2 eine Unterdruckkammer (nicht gezeigt) und auf der rechten Seite der beweglichen Wand 2 eine Druckkammer (nicht gezeigt) befindet. Eine Druckdifferenz zwischen der Druck- und der Unterdruckkammer verursacht eine Kraft Fx an der beweglichen Wand 2. Diese Kraft Fx bewirkt eine Verschiebung der beweglichen Wand 2 in x-Richtung, wobei das Gehäuse 1 mitgenommen wird.

Die elektromagnetische Betätigungseinrichtung ist in dem Gehäuse 1 angeordnet und umfaßt eine Spule 3 und einen Anker 4 mit ringzylindrischer Gestalt der relativ zu dem Gehäuse 1 mit Unterstützen einer ersten Feder 5 entgegen der x-Richtung bewegbar ist. Im Inneren des Gehäuses 1 ist ein bezogen auf das Gehäuse 1 ortsfester ringförmiger Ventilsitz 9 ausgebildet, der einen in die auf der einen Seite der beweglichen Wand 2 (in Fig. 1 links) angeordnete Unterdruckkammer (nicht gezeigt) mündenden Kanal 10 von einem von dem Anker 4 und dem ringförmigen Ventilsitz 9 begrenzten ringzylinderförmigen Raum 11 trennt, der über eine Aussparung 13 im Gehäuse 1 mit der auf der anderen Seite der beweglichen Wand 2 (in Fig. 1 rechts) angeordneten Druckkammer (nicht gezeigt) in Verbindung steht. An dem rechten Ende des Ankers 4 ist ein konzentrisches Ventilelement 6 ausgebildet. Der Ventilsitz 9 und das Ventilelement 6 wirken mit einem ringförmigen Ventilkörper 7 zusammen. Durch eine zweite Feder 8 ist der Ventilkörper 7 in Richtung auf den Ventilsitz 9 bzw. das Ventilelement 6 vorgespannt.

Koaxial und innerhalb des ringzylindrischen Ankers 4 sind ein Kolben 17 und eine mit diesem verbundene Kolbenstange 12 geführt. Der Kolben 17 steht mit einer Betätigungseinrichtung (nicht gezeigt) in Verbindung, die in bekannter Weise zur mechanischen Betätigung des Bremskraftverstärkers (nicht gezeigt) dient. Der Kolben 17 ist über ein ringförmiges Dichtelement 18 gegenüber dem Anker 4 bzw. dem Ventilelement 6 in radialer Richtung abgedichtet. Auf der einen Seite des Dichtelements 18 (in Fig. 1 rechts) herrscht ständig Atmosphärendruck.

Der Anker 4 bzw. das Ventilelement 6 weist eine Aussparung 15 auf, an die sich die Aussparung 13 in dem Gehäuse 1 anschließt. Ein Anschlagglied 14 ist zur gemeinsamen axialen Bewegung mit dem Kolben 17 bzw. der Kolbenstange 12 fest verbunden und erstreckt sich radial durch die Aussparungen 15 und 13 nach außen. Bei mechanisch unbetätigtem Bremskraftverstärker nimmt der Kolben 17 bzw. die Kolbenstange 12 die in Fig. 1 und 2 gezeigte Ruhestellung ein, bei der das Anschlagglied 14 an einem von der Stellung des Gehäuses 1 unabhängigen Anschlag 16 anliegt.

Der Anker 4 bzw. das Ventilelement 6 wird von einer ersten Feder 5, die sich an dem Gehäuse 1 abstützt, nach rechts gedrängt. Bei unbetätigter elektromagnetischer Einrichtung gemäß Fig. 1 stützt sich der Anker 4 bzw. das Ventilelement 6 über die Aussparung 15 an dem Anschlagglied 14 ab. Dadurch nimmt der Anker 4 eine bestimmte Position in x-Richtung ein, bei der das Ventilelement 6 an dem Ventilkörper 7 derart anliegt, daß der in die Unterdruckkammer mündende Kanal 10, der mit der Druckkammer in Verbindung stehende Raum 11 und die sich rechts von dem Dichtelement 18 befindende Atmosphäre jeweils gegeneinander abgesperrt sind.

Bei Beaufschlagung der Spule 3 mit Strom wird auf den Anker 4 eine Magnetkraft ausgeübt, die nach links gerichtet ist, und somit der von der ersten Feder 5 ausgeübten Federkraft entgegenwirkt. Dadurch wird das Ventilelement 6 von dem Ventilkörper 7 wegbewegt und es entsteht über den Raum 11 eine Verbindung von der Druckkammer zur Atmosphäre, wobei die Verbindung zu dem der Unterdruckkammer zugeordneten Kanal 10 abgesperrt ist. Da die Unterdruckkammer an eine Vakuumquelle (nicht gezeigt) angeschlossen ist, entsteht an der beweglichen Wand 2 eine Druckdifferenz, die eine Kraft Fx in x-Richtung bewirkt, unter der sich auch das Gehäuse 1 in x-Richtung mitbewegt.

Dabei verschiebt sich auch die Aussparung 15 in dem Anker 4 bzw. dem Ventilelement 6 in Bezug auf das Anschlagglied 14 in x-Richtung nach links, so daß der Anker 4 bzw. das Ventilglied 6 keine Abstützung durch das Anschlagglied 14 erfahren.

Bei dem in Fig. 2 dargestellten Betätigungszustand ist der durch die Spule 3 fließende Strom auf eine derartige Stärke eingestellt, daß der Anker 4 eine bestimmte Position einnimmt, in der das Ventilelement 6 wie bei dem in Fig. 1 gezeigten unbetätigten Zustand an dem Ventilkörper 7 anliegt, so daß der Kanal 10, der Raum 11 und die Atmosphäre jeweils gegeneinander abgesperrt sind. Dadurch wird eine an der beweglichen Wand 2 anstehende Druckdifferenz aufrechterhalten, so daß das Gehäuse 1 um den Weg dx aus der Ruhestellung gemäß Fig. 1 verschoben ist. Hierbei handelt es sich um eine sogenannte "Halte-stellung".

Wird ausgehend von dieser "Haltestellung" der durch die Spule 3 fließende Strom reduziert, so werden der Anker 4 und das Ventilelement 6 unter Wirkung der von der ersten Feder 5 ausgeübten Federkraft in x-Richtung nach rechts bewegt, wobei der Ventilkörper 7 gegen die Wirkung der von der zweiten Feder 8 ausgeübten Kraft von dem ortsfesten Ventilsitz 9 abgehoben wird. Dies wird dadurch erreicht, daß die zweite Federanordnung 8 eine niedrigere Federkonstante hat als die erste Federanordnung 5. Dadurch entsteht eine Verbindung zwischen dem Kanal 10 und dem Raum 11, wobei die Atmosphäre gegenüber dieser Verbindung abgesperrt ist. Dies führt zu einem Druckausgleichsvorgang zwischen der Druckkammer und der Unterdruckkammer, so daß die an der beweglichen Wand 2 anstehende Druckdifferenz abgebaut wird. Folglich handelt es sich hierbei um eine sogenannte "Abbaustellung".

Eine sogenannte "Aufbaustellung" wird ausgehend von der "Haltestellung" eingestellt, indem der durch die Spule 3 fließende Strom soweit erhöht wird, daS der Anker 4 und das Ventilelement 6 gegen die Wirkung der ersten Feder 5 in x-Richtung nach links bewegt wird, wobei das Ventilelement 6 von dem Ventilkörper 7 abgehoben wird. Dadurch entsteht eine Verbindung von der Atmosphäre zu dem Raum 11, wobei der Raum 10 gegenüber dieser Verbindung abgesperrt ist, was wie bereits erläutert zu einer Erhöhung der an der beweglichen Wand 2 anstehenden Druckdifferenz führt.

Die auf den Anker 4 wirkende Magnetkraft ist eine Funktion des durch die Spule 3 fließenden Stroms. Durch Variation des durch die Spule 3 fließenden Stroms kann die Position des Ankers 4 in x-Richtung eingestellt werden, so daß durch gezielten zeitlichen Wechsel zwischen Halte-, Abbau- und Aufbaustellung jeder gewünschte Druckverlauf eingestellt werden kann. Die Bestromung der Spule 3 kann durch Strom-, Spannungs- bzw. Pulsweitenmodulationssignale durch eine elektrische Steuerung (nicht gezeigt) erfolgen.

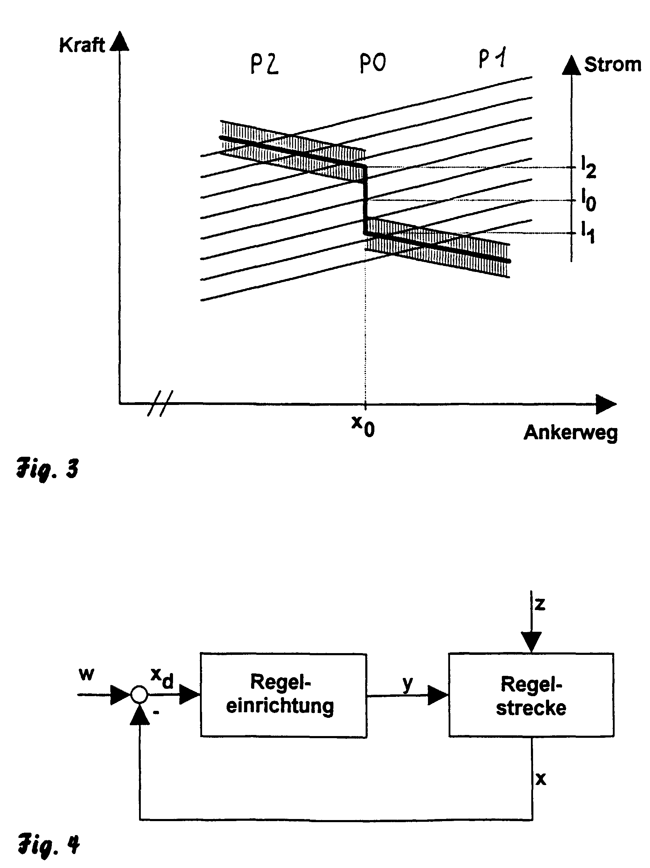

In dem Diagramm gemäß Fig. 3 ist auf der Abszisse der Weg des Ankers 4 in x-Richtung und auf der Ordinate die auf den Anker 4 ausgeübte Kraft aufgetragen, die sich in Abhängigkeit von dem durch die Spule 3 fließenden Strom entsprechend der Stromkurven ergibt. Hierbei handelt es sich um eine idealisierte schematische Darstellung die sich auf einen Arbeitsbereich bezieht, der derart ausgelegt ist, daß ein proportionaler Zusammenhang zwischen Magnetkraft und Strom besteht. Weiterhin ist die Steuerkennlinie der aus Ventilelement 6, Ventilkörper 7 sowie Ventilsitz 9 gebildeten Ventilanordnung eingetragen. Diese Steuerkennlinie weist insgesamt drei Zweige auf. Bei dem senkrechten Zweig ist einer bestimmten Ankerposition x0 ein Strombereich I1 bis I2 zugeordnet. Die Position x0 entspricht genau der "Haltestellung", bei der das Ventilelement 6 und der Ventilsitz 9 an dem Ventilkörper 7 abdichtend anliegen. (Der sich nach links an den senkrechten Zweig anschließende geneigte Zweig gilt für einen Strom größer als I2 und steht für die "Aufbaustellung", während der von dem senkrechten Zweig nach rechts abgehende geneigte Zweig für einen Strom kleiner als I1 gilt und die "Abbaustellung" charakterisiert.)

Bedingt durch Störeinflüsse, die beispielsweise durch Reibungsverluste bei Bewegung des Ankers 4 und der mit ihm gekoppelten Ventilkdmponenten 6, 7 oder durch Toleranzen der ersten und zweiten Federanordnung 5, 6 oder durch Schwankungen externer Reaktionskräfte, wozu insbesondere im Fall eines Bremskraftverstärkers Schwankungen des Druckkraftanteils in der Unterdruck kammer zählen, hervorgerufen werden, ist die Steuerkennlinie im Bereich der beiden geneigten Zweige mit einem Streuband behaftet. Dies erweist sich vor allem bei der genauen Einstellung der "Haltestellung" als problematisch. Wird zum Beispiel eine Umschaltung von "Aufbaustellung" nach Haltestellung erwünscht, so kann es vorkommen, daß unmittelbar nach "Abbaustellung" umgeschaltet wird, wodurch ein abrupter Druckabfall eintritt, der insbesondere bei sicherheitskritischen Anwendungen, wie bei einem elektronisch gesteuerten Bremskraftverstärker, schwerwiegende Auswirkungen zur Folge haben kann. Um diesem Problem entgegenzuwirken wird bei Umschaltung in "Haltestellung" immer ein Strom I0 eingestellt, der sich als arithmetischer Mittelwert aus den Strömen I1 und I2 ergibt, da die Anordnung so bemessen ist, daß sich die untere Grenze des Streubandes des linken geneigten Zweiges und die obere Grenze des Streubandes des rechten geneigten Zweiges nicht überdecken.

Gemäß einer bevorzugten Ausführungsform des erfindungsgemäßen Verfahrens erfolgt der Betrieb der elektromagnetischen Betätigungseinrichtung in einem geschlossenen Regelkreis, wie in Fig. 4 dargestellt. Dabei wird eine von der Regelstrecke ausgehende Regelgröße x, beispielsweise die Position des Ankers 4 in x-Richtung, fortlaufend erfaßt und mit einer Führungsgröße w verglichen. Das Ergebnis dieses Vergleichs ist eine Regelabweichung xd, die einer Regeleinrichtung zugeführt wird. Die Stellgröße y, die von der Regeleinrichtung ausgeht, ist der der Spule zugeführte Strom. Bei den Störgrößen z, die von außen auf die Regelstrecke einwirken, handelt es sich vorwiegend um die zuvor erwähnten durch Reibung, Federtoleranzen und Reaktionskräfte verursachten Einflüsse. Anstelle der unmittelbaren Position des Ankers 4 in x-Richtung kann auch eine Größe, die mit der Position des Ankers 4 in x-Richtung in Beziehung steht, als Regelgröße x herangezogen werden. Dies hat den Vorteil, daß zum einen aufwendige Mittel zur Sensierung des Ankerwegs entfallen können, und daß zum anderen bei elektronischen Komponenten zur Regelung des Stroms durch die Spule 3 Kosten eingespart werden können. Im Fall eines elektronisch geregelten Bremskraftverstärkers könnte die Regelgröße x beispielsweise der Verstärkerausgangsdruck und/oder die Verstärkerausgangskraft und/oder die Fahrzeuggeschwindigkeit und/oder die Fahrzeugverzögerung sein, also Meßgrößen, die in dem Fahrzeug ohnehin erfaßt werden.

Die Erfindung betrifft auch eine elektromagnetische Betätigungseinrichtung, die eine mit einem Steuerstrom I beaufschlagbare Magnetspule 3 und einen der Magnetspule 3 zugeordneten Anker 4 aufweist, der dazu eingerichtet ist, Bewegungen auszuführen, die von einem durch die Magnetspule 3 fließenden Steuerstrom I und einer den Anker 4 in entgegengesetzte Richtungen vorspannende Federanordnung 5,8 abhängig sind, wobei durch einen Anschlag 9 für ein erstes Element 8 der Federanordnung eine Haltestellung P0 definiert ist, die der Anker 4, belastet durch ein zweites Element 5 der Federanordnung und eine aus einem Haltestrom durch die Magnetspule 3 resultierende, der Federkraft des ersten Elementes 8 der Federanordnung entgegengesetzte Magnetkraft einnimmt, wobei die Federkennlinien der Elemente 5,8 der Federanordnung so festgelegt sind, daß ein durch die Magnetspule 3 fließender Haltestrom I0 auf einen höheren Wert I2; I2>I0 oder auf einen niedrigeren Wert I1; I1<I0 veränderbar ist, ohne daß der Anker 4 die Haltestellung P0 verläßt, und der höhere sowie der niedrigere Stromwert I1, I2 so bemessbar sind, daß Störungseinflüsse auf die den Anker 4 betätigenden Magnet- und Federkräfte den Anker 4 nicht aus seiner Haltestellung P0 in eine erste oder eine zweite betätigte Stellung P1, P2 bringen.

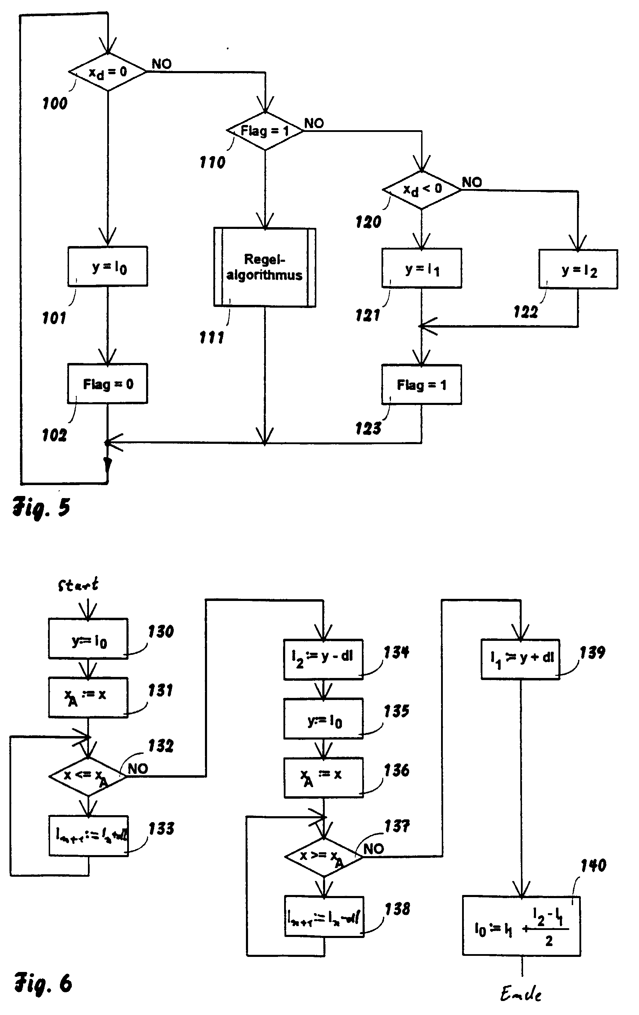

In Fig. 5 ist der Regelvorgang in Form eines Flußdiagramms dargestellt, welches zyklisch durchlaufen wird. In einem ersten Schritt 100 findet zunächst eine Abfrage der Regelabweichung xd statt. Weist die Regelabweichung sc den Wert Null oder einen Wert in der Größenordnung von Null auf, so wird im Schritt 101 die Stellgröße y auf den Strom Io für die "Haltestellung" eingestellt. Weiterhin wird im Schritt 102 ein Flag zurückgesetzt. Das Flag gibt an, wenn es zurückgesetzt ist, daß sich das System in "Haltestellung" befindet, und wenn es gesetzt ist, daß sich das System in "Aufbaustellung" oder "Abbaustellung" befindet und der eigentliche Regelalgorithmus 111 zu durchlaufen ist. Wird im Schritt 100 eine Regelabweichung festgestellt, so wird im Schritt 110 das Flag abgefragt. Ist das Flag noch zurückgesetzt, so wird im Schritt 120 die Änderungsrichtung der Regelabweichung xd festgestellt. Ist die Regelabweichung negativ, s0 wird im Schritt 121 die Stellgröße y auf den Strom I1 für die "Abbaustellung" gesetzt. Ist dagegen die Regelabweichung xd positiv, so wird im Schritt 122 die Stellgröße y auf den Strom I2 für die "Aufbaustellung" gesetzt. Dann wird im Schritt 123 das Flag gesetzt, so daß im nächsten Zyklus der Regelalgorithmus 111 abgearbeitet werden kann. Dadurch, daß vor Abarbeitung des Regelalgorithmus 111 die Stellgröße y entsprechend der Änderungsrichtung der Regelabweichung xd vorgegeben wird, ergeben sich besonders kurze Einschwingvorgänge bei der Regelung.

Der Regelalgorithmus 111 kann sowohl ein parameteroptimaler als auch ein strukturoptimaler Reglertyp sein. Als parameteroptimale Typen kommen insbesondere klassische Regler mit Proportional- und/oder Integral- und/oder Differential-Verhalten zur Anwendung, die entweder in Form einer elektronischen Schaltung oder in Form von Differenzgleichungen durch Programmierung eines Mikrorechners realisiert werden. Bei strukturoptimalen Typen, die vorwiegend auf einem Mikrorechner programmiert werden, können beispielsweise Deadbeat-Regler eingesetzt werden die für eine adaptive Regelung besonders geeignet sind.

Da die Eckströme I1, I2 und der davon abgeleitete Strom I0 aufgrund der zuvor genannten äußeren Störeinflüsse nicht eindeutig bestimmt sind, ist ein Lernprozeß zur Ermittlung der Stromwerte I0, I1 und I2 gemäß der Ventilsteuerkennlinie vorgesehen, der in Fig. 6 in Form eines Flußdiagramms dargestellt ist. Dabei wird zunächst im Schritt 130 die Stellgröße y auf den Haltestrom I0 eingestellt und im Schritt 131 der aktuelle Wert der Regelgröße x abgespeichert. Daraufhin wird eine Schleife durchlaufen, bei der im Schritt 133 die Stellgröße y solange schrittweise erhöht wird bis im Schritt 132 eine Änderung der Regelgröße x festgestellt wird. Anschließend wird der Wert der Regelgröße y unter dem Eckwert I2 abgespeichert, wobei eine Differenz dI subtrahiert wird. Nachdem der Eckwert I2 bestimmt ist, wird die Stellgröße y im Schritt 135 wieder auf den Haltestrom I0 eingestellt und es wird im Schritt 136 der aktuelle Wert der Regelgröße x zwischengespeichert. Analog zur Bestimmung des Eckwertes von I2 erfolgt nun die Bestimmung des Eckwertes von I1, wobei im Schritt 138 die Stellgröße y solange schrittweise erniedrigt wird, bis im Schritt 137 eine Änderung der Regelgröße x erkannt wird. Bei der anschließenden Abspeicherung des Eckwertes von I1 im Schritt 139, wird zur Stellgröße y eine Differenz dI addiert. Da jetzt die Eckwerte von I1 und I2 bestimmt sind, kann im abschließenden Schritt 140 der Haltestrom I0 als arithmetischer Mittelwert berechnet werden.

Die Eckwerte von I1 und I2 werden beim Regelvorgang als erste Stellgröße vorgegeben und jeweils um eine Differenz dI in Richtung auf den Haltestrom I0 verschogen. Damit wird erreicht, daß das System zumindest für den ersten Regelzyklus noch in der "Haltestellung" verbleibt und anschließend ein weicher Übergang in die "Aufbaustellung" oder die "Abbaustellung" stattfindet, wodurch ein Überschwingen, das die Regelgüte verschlechtert, vermieden wird.

Die Durchführung des Lernprozesses für die Eckwerte der Ströme I1 und I2 kann beispielsweise bei jeder Inbetriebnahme des Systems einmalig erfolgen. Es ist aber auch möglich den Lernprozeß in regelmäßigen Zeitabständen immer dann durchzuführen, wenn die Anordnung sich zum Beispiel in einem unbetätigten Zustand befindet. Bezogen auf einen elektronisch gesteuerten Bremskraftverstärker bedeutet dies, daß der Lernprozeß zumindest bei jedem Fahrtantritt beim Einschalten der Zündung und sogar auch während der Fahrt in regelmäßigen Zeitabständen ausgeführt wird.

Abschließend sei darauf hingewiesen, daß das Anwendungsgebiet des erfindungsgemäßen Verfahrens zum Betreiben einer elektromagnetischen Betätigungseinrichtung nicht nur auf einen elektronisch gesteuerten Bremskraftverstärker begrenzt ist. Als weiteres Anwendungsbeispiel sie ein Mengenregelventil erwähnt, bei dem die Durchströmmenge des Ventils als Funktion des die elektromagnetische Einrichtung steuernden Stromes einstellbar ist, welches in der deutschen Patentanmeldung, Aktenzeichen 195 18 333.9, behandelt wird. Ein solches Ventil nimmt im elektrisch unbetätigten Zustand eine mechanisch festgelegte Ruhestellung ein. Bei Bestromung der elektromagnetischen Einrichtung nimmt der Anker bzw. der Ventilkörper des Ventils aufgrund einer an der Druckverringerungsstufe des Ventils anstehenden Druckdifferenz, die gemäß einer Kräftebilanz mit der elektromagnetischen Kraft zusammenwirkt, eine bestimmte Regelposition ein. In dieser Regelposition kann innerhalb eines Strombereiches die Durchströmmenge des Ventils zum Druckaufbau durch Variation des Stroms durch die Elektromagnetanordnung variiert werden. Außerhalb des Strombereiches sind andere Ventilfunktionen wie beispielsweise Druckabbauen und Druckhalten einstellbar. Grundsätzlich gilt aber, daß der vorbestimmten Regelposition ein Strombereich zugeordnet ist, wobei die Eckwerte bedingt durch äußere Störeinflüsse ebenfalls in einem Streuband liegen. Wird ein solches Mengenregelventil beispielsweise zur Einstellung des Bremsdruckes in einer Fahrzeugbremsanlage verwendet, so kann das Sicherheitsrisiko einer Fehlschaltung, beispielsweise daß nach Druckabbau anstelle nach Druckaufbauen geschaltet wird, durch Anwendung des erfindungsgemäßen Verfahrens nahezu vollkommen ausgeschlossen werden.

**Patentansprüche**

1.  Elektromagnetische Betätigungseinrichtung, die eine mit einem Steuerstrom (I) beaufschlagbare Magnetspule (3) und einen der Magnetspule (3) zugeordneten Anker (4) aufweist, der dazu eingerichtet ist, Bewegungen auszuführen, die von einem durch die Magnetspule (3) fließenden Steuerstrom (I) und einer den Anker (4) in entgegengesetzte Richtungen vorspannende Federanordnung (5,8) abhängig sind,
    wobei eine Haltestellung (P0) als Stellgröße (y) definiert ist, die der Anker (4) bei einem Haltestrom (IO) durch die Magnetspule (3) einnimmt,
    wobei der durch die Magnetspule (3) fließende Haltestrom (I0) auf einen höheren Wert (I2; I2>I0) oder auf einen niedrigeren wert (I1; I1<I0) veränderbar ist, ohne daß der Anker (4) die Haltestellung (P0) verläßt, und

        der höhere sowie der niedrigere Stromwert (I2, I1) so bemessbar sind, daß Störungseinflüsse auf die den Anker (4) betätigenden Magnet- und Federkräfte den Anker (4) nicht in eine von der Haltestellung (P0) unterschiedliche betätigte Stellung (P1, P2) bringen, dadurch gekennzeichnet daß
        der höhere Stromwert (I2) in der Weise bestimmt wird, daß
        eine mit der Position des Ankers (4) in der Haltestellung (P0) in Beziehung stehende Größe bestimmt wird;
        der Steuerstrom um einen vorbestimmten

Stromschritt ( In+1 :=In + dl ) schrittweise solange erhöht wird und der Steuerstrom (In+1) an die Magnetspule (3) der elektromagnetischen Betätigungseinrichtung als Stellgröße (y) ausgegeben wird, bis sich die mit der Position des Ankers (4) in der Haltestellung (P0) in Beziehung stehende Größe um einen vorherbestimmten Wert in Richtung der zweiten betätigten Stellung (P2) ändert;

und der niedrigere Stromwert (I1) in der Weise bestimmt wird, daß

eine mit der Position des Ankers (4) in der Haltestellung (P0) in Beziehung stehende Größe bestimmt wird;

der Steuerstrom um einen vorbestimmten Stromschritt ( In+1 :=In - dl ) schrittweise solange verringert wird und der Steuerstrom (In+1) an die Magnetspule (3) der elektromagnetischen Betätigungseinrichtung als Stellgröße (y) ausgegeben wird, bis sich die mit der Position des Ankers (4) in der Haltestellung (P0) in Beziehung stehende Größe um einen vorherbestimmten Wert in Richtung der ersten betätigten Stellung (P1) ändert.

2. Regeleinrichtung für den Steuerstrom einer elektromagnetische Betätigungseinrichtung nach Anspruch 1, wobei

- eine mit der Position des Ankers (4) in Beziehung stehende Größe erfaßt und einer Regeleinrichtung als Regelgröße (x) zugeführt wird,
- durch die Regeleinrichtung der Magnetspule (3) als Stellgröße (y) ein Steuerstrom zugeführt wird, und
- als Führungsgröße (w) der Regeleinrichtung von außen ein Sollwert für die mit der Position des Ankers (4) in Beziehung stehenden Größe vorgegeben wird.

3. Regeleinrichtung für den Steuerstrom einer elektromagnetische Betätigungseinrichtung nach Anspruch 2, bei der der Haltestrom (I0), der höhere (I2; I2>I0) sowie der niedrigere Stromwert (I1; I1<I0) so festgelegt werden, daß Störungseinflüsse auf die den Anker (4) betätigenden Magnet- und Federkräfte den Anker (4) beim Wechsel aus einer von der Haltestellung (P0) unterschiedliche betätigten Stellung (P1, P2) in die Haltestellung (P0) nicht in eine von der Haltestellung (P0) unterschiedliche betätigte Stellung (P2, P1) bringen.

4. Regeleinrichtung für den Steuerstrom einer elektromagnetische Betätigungseinrichtung nach Anspruch 2 oder 3, bei der

ein Steuerstrom (I0) für die Haltestellung (P0) der elektromagnetischen Betätigungseinrichtung als Stellgröße (x) ausgegeben wird, falls eine Regelabweichung (xd) zwischen einer Führungsgröße (w) und einer Regelgröße (x) den Betrag eines vorbestimmten Wertes nicht überschreitet;

ein Steuerstrom (I1) für die erste Betätigungsstellung (P1) der elektromagnetischen Betätigungseinrichtung als Stellgröße ausgegeben wird, falls die Regelabweichung (xd) zwischen der Führungsgröße (w) und der Regelgröße (x) den vorbestimmten Wert unterschreitet; und

ein Steuerstrom (I2) für eine zweite Betätigungsstellung (P2) der elektromagnetischen Betätigungseinrichtung als Stellgröße ausgegeben wird, falls die Regelabweichung (xd) zwischen der Führungsgröße (w) und der Regelgröße (x) den vorbestimmten Wert überschreitet.

5. Regeleinrichtung für den Steuerstrom einer elektromagnetische Betätigungseinrichtung nach einem der Ansprüche 2 bis 4, die

einen Regelalgorithmus abarbeitet, falls ein Steuerstrom (I0) für die Haltestellung (P0) oder ein Steuerstrom (I1) für eine erste Betätigungsstellung (P1) oder ein Steuerstrom (P2) für eine zweite Betätigungsstellung (P2) der elektromagnetischen Betätigungseinrichtung als Stellgröße (y) ausgegeben wurde; und/oder einen Regelalgorithmus abarbeitet, falls eine Regelabweichung (xd) zwischen einer Führungsgröße (w) und einer Regelgröße (x) den Betrag eines vorbestimmten Wertes überschreitet.

6. Regeleinrichtung für den Steuerstrom einer elektromagnetische Betätigungseinrichtung nach einem der Ansprüche 2 bis 4, wobei

der ermittelte niedrigere Steuerstrom (I) vor dem Speichern um einen Stromschritt (dl) verringert wird.

7. Regeleinrichtung für den Steuerstrom einer elektromagnetische Betätigungseinrichtung nach einem der Ansprüche 2 bis 4, wobei

der ermittelte höhere Steuerstrom (I) vor dem Speichern in Schritt d) um einen Stromschritt (dl) erhöht wird.

8. Regeleinrichtung für den Steuerstrom einer elektromagnetische Betätigungseinrichtung nach einem der vorhergehenden Ansprüche, wobei

ein Haltestrom (I0) für den Betrieb der elektromagnetischen Betätigungseinrichtung aus dem höheren und dem niedrigeren Stromwert (I1, I2) ermittelt wird.

9. Regeleinrichtung für den Steuerstrom einer elektromagnetische Betätigungseinrichtung nach Anspruch 8, wobei der Haltestrom (I0) als arithmetisches Mittel des höheren und des niedrigeren Stromwertes (I1, I2) bestimmt wird.

10. Regeleinrichtung für den Steuerstrom einer elektromagnetische Betätigungseinrichtung nach Anspruch 1, wobei der ausgegebene niedrigere Steuerstrom (I) als niedrigerer Stromwert (I1) gespeichert wird und der höhere Steuerstrom (I) als höherer Stromwert (I2) gespeichert wird.

11. Elektromagnetische Betätigungseinrichtung nach Anspruch 1, wobei durch einen Anschlag (9) für ein erstes Element (8) der Federanordnung eine Haltestellung (P0) definiert ist, die der Anker (4), belastet durch ein zweites Element (5) der Federanordnung und eine aus einem Haltestrom durch die Magnetspule (3) resultierende, der Federkraft des ersten Elementes (8) der Federanordnung entgegengesetzte Magnetkraft einnimmt, wobei die Federkennlinien der Elemente (5,8) der Federanordnung so festgelegt sind, daß ein durch die Magnetspule (3) fließender Haltestrom (I0) auf einen höheren Wert (I2; I2>I0) oder auf einen niedrigeren Wert (I1; I1<I0) veränderbar ist, ohne daß der Anker (4) die Haltestellung (P0) verläßt, und der höhere sowie der niedrigere Stromwert (I1, I2) so bemessbar sind, daß Störungseinflüsse auf die den Anker (4) betätigenden Magnet- und Federkräfte den Anker (4) nicht aus seiner Haltestellung (P0) in eine erste oder eine zweite betätigte Stellung (P1, P2) bringen.

**Claims**

1. An electromagnetic actuating device, comprising a solenoid coil (3) to which a control current (I) can be applied and an armature (4) associated with the solenoid coil (3) which is adapted to carry out movements which are dependent upon a control current (I) flowing through the solenoid coil (3) and a spring arrangement (5, 8) for biassing the armature (4) into opposite directions,
with a holding position (P0) being defined as an actuating variable (y) which is assumed by the armature (4) at a holding current (I0) through the solenoid coil (3);
with the holding current (I0) flowing through the solenoid coil (3) being variable to a higher value (I2; I2 > I0) or to a lower value (I1; I1 < I0), with the armature (4) not leaving the holding position (P0), and

both the higher and the lower current values (I1, I2) being capable of being dimensioned in such a manner that interference influences on the magnetic and spring forces which actuate the armature (4) do not bring the armature (4) into an actuated position (P1, P2) which is different from the holding position (P0),
characterized in that the higher current value (I2) is determined in such a manner that

a value is determined which is related to the position of the armature (4) in the holding position (P0);
the control current is incremented by a predetermined current increment ( In+1 := In + dI ) and the control current(In+1) to the solenoid coil (3) of the electromagnetic actuating device as the actuating variable (y) is output until the value related to the position of the armature (4) in the holding position (P0) changes by a predetermined value in the direction of the second actuated position (P2);
and the lower current value (I1) is determined in such a manner that
a value is determined which is related to the position of the armature (4) in the holding position (P0);
the control current is decremented by a predetermined current increment ( In+1 := In - dI ) and the control current(In+1) to the solenoid coil (3) of the electromagnetic actuating device as the actuating variable (y) until the value related to the position of the armature (4) in the holding position (P0) changes by a predetermined value in the direction of the first actuated position (P1).

2. A control device for the control current of an electromagnetic actuating device according to claim 1, wherein

- a value related to the position of the armature (4) is sensed and supplied as the controlled variable (x) to a control device,
- a control current is supplied by the control device to the solenoid coil (3) as the actuating variable (y), and
- a set point as the command variable (w) of the control device is externally specified for the value which is related to the position of the armature (4).

3. A control device for the control current of an electromagnetic actuating device according to Claim 2, wherein the holding current (I0), the higher (I2; I2 > I0) as well as the lower (I2; I2 < I0) current value are specified in such a manner that interference influences acting on the magnetic and spring forces which actuate the armature (4) do not bring the armature (4) when it changes from an actuated position (P1, P2) which is different from the holding position (P0) into the holding position (P0) into an actuated position (P2, P1) which is different from the holding position (P0).

4. The control device for the control current of an electromagnetic actuating device according to Claim 2 or 3, wherein

     a control current (I0) for the holding position (P0) of the electromagnetic actuating device is output as the actuating variable (x) if a control deviation (xd) between a command variable (w) and a controlled variable (x) does not exceed the amount of a predetermined value;
a control current (I1) for the first actuating position (P1) of the electromagnetic actuating device is output as the actuating variable if the control deviation (xd) between the command variable (w) and the controlled variable (x) is less than the predetermined value; and
a control current (I2) for a second actuating position (P2) of the electromagnetic actuating device is output as the actuating variable if the control deviation (xd) between the command variable (w) and the controlled variable (x) exceeds the predetermined value.

5. The control device for the control current of an electromagnetic actuating device according to one of Claims 2 through 4, which

     executes a control algorithm if a control current (I0) for the holding position (P0) or a control current (I1) for a first actuated position (P1) or a control current (P2) for a second actuated position (P2) of the electromagnetic actuating device was output as the actuating variable (y); and/or
executes a control algorithm if a control deviation (xd) between a command variable (w) and a controlled variable (x) exceeds the amount of a predetermined value.

6. The control device for the control current of an electromagnetic actuating device according to one of Claims 2 through 4, wherein

     the determined lower control current (I) is decreased by one current increment (dI) prior to the storing operation.

7. The control device for the control current of an electromagnetic actuating device according to one of Claims 2 through 4, wherein

     the determined higher control current (I) is increased by one current increment (dI) prior to the storing operation in step d).

8. The control device for the control current of an electromagnetic actuating device according to one of the previous claims, wherein

     a holding current (I0) for the operation of the electromagnetic actuating device is determined from the higher and the lower current values (I1, I2).

9. The control device for the control current of an electromagnetic actuating according to Claim 8, wherein the holding current (I0) is determined as the arithmetic mean of the higher and the lower current values (I1, I2).

10. The control device for the control current of an electromagnetic actuating according to Claim 1, wherein the output lower control current (I) is stored as the lower current value (I1) and the higher control current (I) is stored as the higher control current (I2).

11. The electromagnetic actuating means according to Claim 1, 10, wherein a holding position (P0) is defined by a stop (9) for a first element (8) of the spring arrangement which is assumed by the armature (4) loaded by a second element (5) of the spring arrangement and a magnetic force which results from a holding current through the solenoid coil (3) being opposed to the spring force of the first element (8) of the spring arrangement, with the spring characteristics of the elements (5, 8) of the spring arrangement being established in such a manner that a holding current (I0) flowing through the solenoid coil (3) is variable to a higher value (I2; I2 > I0) or to a lower value (I1; I1 < I0), with the armature (4) not leaving the holding position (P0), and both the higher and the lower current values (I1, I2) being able to be dimensioned in such a manner that interference influences on the magnetic and spring forces which actuate the armature (4) do not bring the armature (4) from its holding position (P0) into a first or a second actuated position (P1, P2).

**Revendications**

1. Dispositif d'actionnement électromagnétique présentant une bobine d'électroaimant (3) pouvant être alimentée avec un courant de commande (I) et un induit (4) associé à la bobine d'électroaimant (3), l'induit (4) étant aménagé pour effectuer des mouvements qui dépendent d'un courant de commande (I) circulant dans la bobine d'électroaimant (3) et d'un dispositif élastique (5, 8) poussant en permanence l'induit (4) dans des directions antagonistes, dans lequel une position d'arrêt (P0) que l'induit (4) prend lorsqu'un courant d'arrêt (I0) circule dans la bobine d'électroaimant (3) est définie comme variable réglante (y),

dans lequel le courant d'arrêt (I0) circulant dans la bobine d'électroaimant (3) peut être modifié à une valeur supérieure (I2; I2>I0) ou à une valeur inférieure (I1; I1<I0) sans que l'induit (4) quitte la position d'arrêt (P0), et

la valeur de courant supérieure ainsi que la valeur de courant inférieure (I2, I1) peuvent être proportionnées de telle façon que des influences perturbatrices sur les forces magnétiques et élastiques actionnant l'induit (4) n'amènent pas l'induit (4) dans une position actionnée (P1, P2) distincte de la position d'arrêt (P0), caractérisé en ce que

la valeur supérieure de courant (I2) est déterminée de la façon suivante

une grandeur en relation avec la position de l'induit (4) dans la position d'arrêt (P0) est déterminée;

le courant de commande est augmenté pas à pas d'un incrément de courant prédéterminé ( $I_{n+1} := I_n + dI$ ) tant que et le courant de commande ($I_{n+1}$) dans la bobine d'électroaimant (3) du dispositif de commande électromagnétique est émis comme variable réglante (y) jusqu'à ce que la grandeur en relation avec la position de l'induit (4) dans la position d'arrêt (P0) soit modifiée d'une valeur prédéterminée dans la direction de la deuxième position actionnée (P2);

et la valeur inférieure de courant (I1) est déterminée de la façon suivante

une grandeur en relation avec la position de l'induit (4) dans la position d'arrêt (P0) est déterminée;

le courant de commande est réduit pas à pas d'un incrément de courant prédéterminé ($I_{n+1} := I_n - dI$) tant que et le courant de commande ($I_{n+1}$) dans la bobine d'électroaimant (3) du dispositif de commande électromagnétique est émis comme variable réglante (y) jusqu'à ce que la grandeur en relation avec la position de l'induit (4) dans la position d'arrêt (P0) soit modifiée d'une valeur prédéterminée dans la direction de la première position actionnée (P1).

2. Dispositif de régulation pour le courant de commande d'un dispositif d'actionnement électromagnétique selon la revendication 1, dans lequel

- une grandeur en relation avec la position de l'induit (4) est relevée et est transmise à un dispositif de régulation comme grandeur réglée (x),

- un courant de commande servant de variable réglante (y) est transmis à la bobine d'électroaimant par le dispositif de régulation, et

- une valeur de consigne pour la grandeur en relation avec la position de l'induit (4), servant de grandeur de référence (w) du dispositif de régulation est donnée de l'extérieur à l'avance.

3. Dispositif de régulation pour le courant de commande d'un dispositif d'actionnement électromagnétique selon la revendication 2, dans lequel le courant d'arrêt (I0), la valeur supérieure de courant (I2; I2>I0) ainsi que la valeur inférieure de courant (I1; I1<I0) sont fixées de telle façon que des influences perturbatrices sur les forces magnétiques et élastiques actionnant l'induit (4) n'amènent pas l'induit (4) dans une position actionnée (P2, P1) distincte de la position d'arrêt (P0) lors d'un passage d'une position actionnée (P1, P2) distincte de la position d'arrêt (P0) à la position d'arrêt (P0).

4. Dispositif de régulation pour le courant de commande d'un dispositif d'actionnement électromagnétique selon la revendication 2 ou 3, dans lequel

un courant de commande (I0) pour la position d'arrêt (P0) du dispositif d'actionnement électromagnétique est émis en tant que variable réglante (x) dans le cas d'une déviation de réglage (xd) entre une grandeur de référence (w) et une grandeur réglée (x) ne dépasse pas le montant d'une valeur prédéterminée;

un courant de commande (I1) pour la première position d'actionnement (P1) du dispositif d'actionnement électromagnétique est émis en tant que variable réglante dans le cas où la déviation de réglage (xd) entre la grandeur de référence (w) et la grandeur réglée (x) reste inférieure à la valeur prédéterminée; et

un courant de commande (I2) pour une deuxième position d'actionnement (P2) du dispositif d'actionnement électromagnétique est émis en tant que variable réglante dans le cas où la déviation de réglage (xd) entre la grandeur de référence (w) et la grandeur réglée (x) dépasse la valeur prédéterminée.

5. Dispositif de régulation pour le courant de commande d'un dispositif d'actionnement électromagnétique selon l'une quelconque des revendications 2 à 4, qui

exécute un algorithme de régulation dans le cas où un courant de commande (I0) pour la position d'arrêt (P0) ou un courant de commande (I1) pour une première position actionnée (P1) ou un courant de commande (I2) pour une deuxième position actionnée (P2) du dispositif d'actionnement électromagnétique a été émise comme variable réglante (y); et / ou

exécute un algorithme de régulation dans le cas où une déviation de réglage (xd) entre une grandeur de référence (w) et une grandeur réglée (x) dépasse le montant d'une valeur prédéterminée.

6. Dispositif de régulation pour le courant de commande d'un dispositif d'actionnement électromagnétique selon l'une quelconque des revendications 2 à 4, dans lequel

le courant de commande inférieur (I) déterminé est diminué, avant d'être enregistré, d'un pas d'incrément de courant (dI).

7. Dispositif de régulation pour le courant de commande d'un dispositif d'actionnement électromagnétique selon l'une quelconque des revendications 2 à 4, dans lequel

le courant de commande supérieur (I) déterminé est augmenté, avant d'être enregistré, d'un pas d'incrément de courant (dI).

8. Dispositif de régulation pour le courant de commande d'un dispositif d'actionnement électromagnétique selon l'une quelconque des revendications précédentes, dans lequel

un courant d'arrêt (I0) pour le fonctionnement du dispositif d'actionnement électromagnétique est déterminé à partir de la valeur de courant supérieure et de la valeur de courant inférieure (I1, I2).

9. Dispositif de régulation pour le courant de commande d'un dispositif d'actionnement électromagnétique selon la revendication 8, dans lequel le courant d'arrêt (I0) est déterminé par la moyenne arithmétique de la valeur supérieure et de la valeur inférieure du courant (I1, I2).

10. Dispositif de régulation pour le courant de commande d'un dispositif d'actionnement électromagnétique selon la revendication 1, dans lequel le courant de commande inférieur (I) émis est enregistré comme valeur de courant inférieure (I1) et le courant de commande supérieur (I) comme valeur de courant supérieure (I2).

11. Dispositif d'actionnement électromagnétique selon la revendication 1, dans lequel une position d'arrêt (P0) pour un premier élément (8) du dispositif élastique est définie par une butée (9) que l'induit (4) chargé par un deuxième élément (5) du dispositif élastique et une force magnétique résultant d'un courant d'arrêt à travers la bobine d'électroaimant (3) opposée à la force élastique du premier élément (8) du dispositif élastique prend, la courbe caractéristique d'élasticité des éléments (5, 8) du dispositif élastique étant fixées de telle façon qu'un courant d'arrêt (I0) circulant dans la bobine d'électroaimant (3) puisse être modifié à une valeur supérieure (I2; I2>I0) ou à une valeur inférieure (I1; I1<I0) sans que l'induit (4) quitte la position d'arrêt (P0), et que la valeur de courant supérieure ainsi que la valeur inférieure (I1, I2) puissent être proportionnées de telle façon que des influences perturbatrices sur les forces magnétiques et élastiques actionnant l'induit (4) n'amènent pas l'induit (4) hors de sa position d'arrêt (P0) dans une première ou une deuxième position actionnée (P1, P2).

*Fig. 1*

1  3  2  5  4  11  10  6  9  7  8

dx

12  14  16  13  15  18  17

Fx

*Fig. 2*

A

x

Kraft

P2    P0    P1    Strom

$I_2$

$I_0$

$I_1$

$x_0$    Ankerweg

*Fig. 3*

w    $x_d$    Regel-einrichtung    y    Regel-strecke    z

-    x

*Fig. 4*

**Fig. 5**

- 100: $x_d = 0$ — NO
- 101: $y = I_0$
- 102: Flag = 0
- 110: Flag = 1 — NO
- 111: Regel-algorithmus
- 120: $x_d < 0$ — NO
- 121: $y = I_1$
- 122: $y = I_2$
- 123: Flag = 1

**Fig. 6**

Start

- 130: $y := I_0$
- 131: $x_A := x$
- 132: $x <= x_A$ — NO
- 133: $I_{n+1} := I_n + dI$
- 134: $I_2 := y - dI$
- 135: $y := I_0$
- 136: $x_A := x$
- 137: $x >= x_A$ — NO
- 138: $I_{n+1} := I_n - dI$
- 139: $I_1 := y + dI$
- 140: $I_0 := I_1 + \dfrac{I_2 - I_1}{2}$

Ende

14